# EUROPÄISCHE PATENTANMELDUNG

(11) **EP 1 647 443 A2**
(43) Veröffentlichungstag der Anmeldung: **19.04.2006**
(21) Anmeldenummer: 05020326.4
(22) Anmeldetag: 17.09.2005
(51) Int. Cl.: B60N 3/10

(54) **Halter für einen Getränkebehälter zum Einbau in einen Kraftwagen**

(30) Priorität: 15.10.2004 DE 102004050286
(71) Anmelder: fischer automotive systems GmbH, 72160 Horb (DE)
(72) Erfinder: Bieck, Torsten, 23566 Lübeck (DE); Kulajew, Viktor, 72170 Baiersbronn (DE)

(57) **Zusammenfassung**

Die Erfindung betrifft einen Halter (10) für einen nicht dargestellten Getränkebehälter wie beispielsweise eine Getränkedose oder eine Flasche, der zum Einbau in einem Kraftwagen vorgesehen ist. Der Halter (10) weist eine Aufnahme (12) zum Einstellen des Getränkebehälters und eine rohrförmige, in der Aufnahme (12) teleskopierbare Abstützung (16) auf, die von einem Federelement (22) in eine angehobene Stellung bewegbar ist. Eine mit einer Entriegelungstaste (36) entriegelbare Verriegelungseinrichtung (24, 26, 30; 38, 40) hält die Abstützung (16) in der abgesenkten und in der angehobenen Stellung, sie verhindert ein unbeabsichtigtes Niederdrücken der Abstützung (16) aus der angehobenen Stellung.

## Beschreibung

Die Erfindung betrifft einen Halter für einen Getränkebehälter zum Einbau in einem Kraftwagen mit den Merkmalen des Oberbegriffs des Anspruchs 1.

Derartige Halter sind an sich bekannt. Sie dienen zum kippsicheren Halten von Getränkebehältern wie beispielsweise Getränkedosen, Becher, Tassen und sind auch in sonstigen Land-, Luft- oder Wasserfahrzeugen verwendbar. Bekannte Halter weisen eine üblicherweise zylinderförmige, oben offene Vertiefung als Aufnahme zum Einstellen eines Getränkebehälters auf. Dabei bezieht sich oben auf eine vorgesehene Einbaulage des Halters. Weiterhin ist es bekannt, eine beispielsweise ringförmige Abstützung vorzusehen, die in eine angehobene Stellung oberhalb der Aufnahme bewegbar geführt ist. Die Abstützung stützt einen eingestellten Getränkebehälter in größerer Höhe als die Aufnahme seitlich ab und erhöht dadurch die Sicherheit des eingestellten Getränkebehälters gegen Kippen insbesondere bei einem höheren Getränkebehälter.

Der Erfindung liegt die Aufgabe zu Grunde, die Abstützung eines Halters der vorstehend erläuterten Art gegen unbeabsichtigtes Bewegen zu sichern.

Diese Aufgabe wird erfindungsgemäß durch die Merkmale des Anspruchs 1 gelöst. Der erfindungsgemäße Halter weist eine entriegelbare Verriegelungseinrichtung für die Abstützung auf, die die Abstützung in einer abgesenkten und in einer angehobenen Stellung hält. Der Halter kann für jede Stellung eine eigene Verriegelungseinrichtung oder eine gemeinsame Verriegelungseinrichtung für beide Stellungen aufweisen. In der angehobenen Stellung hält die Verriegelungseinrichtung die Abstützung gegen unbeabsichtigtes Niederdrücken beispielsweise beim Einstellen eines Getränkebehälters.

Eine Ausgestaltung der Erfindung sieht ein Entriegelungselement zum manuellen Entriegeln der Verriegelungseinrichtung vor. Das Entriegelungselement ist ein fingerbedienbares Element, beispielsweise eine Taste oder ein Schieber. Die Abstützung des Halters lässt sich nur durch bewusstes Betätigen des Entriegelungselements, also beispielsweise durch Drücken der Entriegelungstaste entriegeln.

Eine Weiterbildung der Erfindung sieht vor, dass die Verriegelungseinrichtung die Abstützung beim Bewegen in die abgesenkte Stellung auch dann verriegelt, wenn das Entriegelungselement betätigt, die Entriegelungstaste also beispielsweise gedrückt ist. Das vereinfacht das Verriegeln in der abgesenkten Stellung, weil das Entriegelungselement, das zum Entriegeln der Abstützung in der angehobenen Stellung betätigt werden muss, nicht während des Absenkens losgelassen werden muss, damit die Abstützung in der abgesenkten Stellung verriegelt.

Eine Ausgestaltung der Erfindung sieht eine ringförmige Abstützung vor, die dadurch dem meist kreisrunden Querschnitt von Getränkebehältern angepasst ist.

Die Erfindung wird nachfolgend anhand eines in der Zeichnung dargestellten Ausführungsbeispiels näher erläutert. Die beiden Figuren zeigen einen erfindungsgemäßen Halter für Getränkebehälter in einer Schnittdarstellung in zwei unterschiedlichen Stellungen. Die Zeichnung ist als vereinfachte Schemadarstellung zu verstehen.

Der in der Zeichnung dargestellte, erfindungsgemäße Halter 10 ist zum Einbau in einen nicht dargestellten Kraftwagen vorgesehen. Der dargestellte Halter 10 ist als Doppelhalter zum Einstellen von zwei Getränkebehältern ausgebildet. Er weist zwei nebeneinander angeordnete, rohrförmige Aufnahmen 12 zum Einstellen je eines nicht dargestellten Getränkebehälters wie beispielsweise eine Getränkedose, eine Flasche, ein Becher oder eine Tasse auf. Die beiden Aufnahmen 12 befinden sich bei der gewählten Blickrichtung hintereinander, eine vor und eine hinter der Zeichenebene. Der Klarheit wegen ist eine der beiden Aufnahmen 12 in die Zeichenebene versetzt dargestellt. An einer Unterseite sind die Aufnahmen 12 durch einen Boden 14 geschlossen, oben sind die Aufnahmen 12 zum Einstellen des Getränkebehälters offen. Dabei bezieht sich unten und oben auf eine vorgesehene Einbau- und Gebrauchslage des Halters 10.

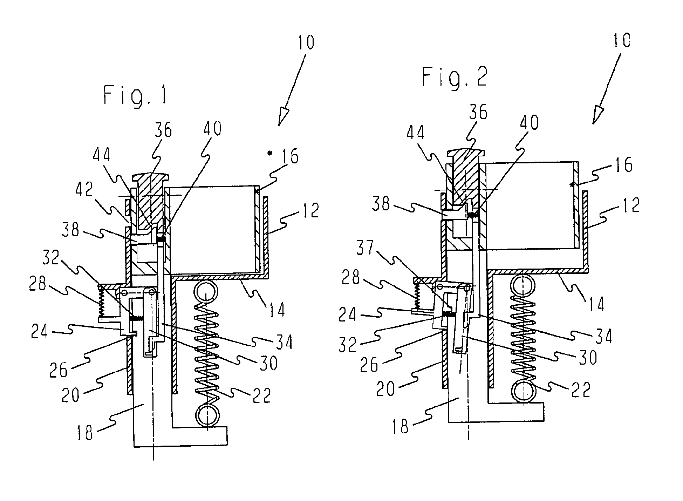

In den Aufnahmen 12 sind rohrförmige Abstützungen 16 teleskopierbar aufgenommen. Die Abstützungen 16 sind unten und oben offen. Sie lassen sich aus einer in Figur 1 dargestellten abgesenkten Stellung in eine in Figur 2 dargestellte angehobene Stellung verschieben. In der abgesenkten Stellung befinden sich die Abstützungen 16 in den Aufnahmen 12, in der angehobenen Stellung stehen die Abstützungen 16 nach oben aus den Aufnahmen 12 vor, sie verlängern sozusagen die Aufnahmen 12 in axialer Richtung.

Die Abstützungen 16 sind an einem zwischen ihnen angeordneten Dom 18 angebracht, der in einem rohrförmigen, nach unten abstehenden Fortsatz 20 zwischen den Aufnahmen 12 verschiebbar geführt ist. Der Dom 18 und der Fortsatz 20 bilden eine Schiebeführung für die beiden Abstützungen 16.

Ein Federelement 22 bewegt die Abstützungen 16 in die angehobene Stellung. Im dargestellten Ausführungsbeispiel dient eine Schraubenzugfeder 22 als Federelement, die am Boden 14 einer Aufnahme 12 und an einem unteren Ende des Doms 18 angreift.

Am rohrförmigen Fortsatz 20 ist ein Winkelhebel 24 schwenkbar gelagert. Der Winkelhebel 24 weist einen Arm auf, der parallel zum Dom 18 nach unten verläuft und einen anderen Arm, der quer in den in diesem Bereich hohlen Dom 18 hineinragt. Am Ende des einen Arms weist der Winkelhebel 24 eine Rastnase 26 auf, die in der abgesenkten Stellung der Abstützungen 16 in eine Ausnehmung des Doms 18 eingreift und die Abstützungen 16 dadurch gegen die Kraft des Federelements 22 in der abgesenkten Stellung verriegelt hält. Ein Federelement 28 beaufschlagt den Winkelhebel 24 in die beschriebenen Verriegelungsstellung.

Innerhalb des Doms 18 ist an dem querstehenden Arm des Winkelhebels 24 ein zweiter, gerader und einarmiger Hebel 30 schwenkbar gelagert, der näherungsweise axial zum Dom 18 verläuft. Ein Federelement 32, das sich am Winkelhebel 24 abstützt, drückt den zweiten Hebel 30 vom Winkelhebel 24 ab.

Der zweite Hebel 30 wirkt mit einem Steuerstab 34 zusammen, der achsparallel im Dom 18 verläuft. Wird der Steuerstab 34 nach unten gedrückt, greift er am zweiten Hebel 30 an und übt über diesen eine Zugkraft auf den querstehenden Arm des Winkelhebels 24 aus. Dadurch wird der Winkelhebel 24 gegen die Kraft des ihn beaufschlagenden Federelements 28 so verschwenkt, dass seine Rastnase 26 außer Eingriff von der Ausnehmung des Doms 18 gelangt. Der Dom 18 und damit die Abstützungen 16 sind entriegelt und werden vom Federelement 22 nach oben in die angehobene Stellung bewegt.

Der Winkelhebel 24, der die Abstützungen 16 durch den Eingriff seiner Rastnase 26 in der Ausnehmung des Doms 18 gegen die Kraft des Federelements 22 in der abgesenkten Stellung hält, bildet zusammen mit dem zweiten, an ihm schwenkbar gelagerten Hebel 30 eine Verriegelungseinrichtung 24, 26, 30. Der Steuerstab 34 wird durch Druck auf eine Entriegelungstaste 36 nach unten bewegt, die sich an einer Oberseite der Abstützungen 16 befindet. Die Entriegelungstaste 36 kann allgemein auch als Entriegelungselement bezeichnet werden. Durch Druck auf die Entriegelungstaste 36, d.h. durch Betätigen des Entriegelungselements wird über den Steuerstab 34 die Verriegelungseinrichtung 24, 26, 30 entriegelt.

Zur Verriegelung der Abstützungen 16 in der angehobenen, in Figur 2 dargestellten Stellung, ist im Dom 18 ein Riegel 38 quer verschieblich angeordnet. Der Riegel 38 wird von einem Federelement 40 beaufschlagt und von diesem in eine Aussparung 42 in einem oberen Bereich des Halters 10 bewegt, wenn die Abstützung 16 in die angehobene Stellung bewegt ist. Die Abstützung 16 ist dadurch in der angehobenen Stellung verriegelt. Der mit der Aussparung 42 zusammenwirkende Riegel 38 bildet eine Verriegelungseinrichtung 38, 42, die die Abstützung 16 in der angehobenen Stellung verriegelt hält. Beim Niederdrücken der Entriegelungstaste 36, d.h. beim Betätigen des Entriegelungselements, drückt eine Schrägfläche 44 der Entriegelungstaste 36 den Riegel 38 gegen die Kraft des Federelements 40 außer Eingriff von der Ausnehmung 42, die Verriegelungseinrichtung 38, 42 wird also ebenfalls durch Niederdrücken der Entriegelungstaste 36 entriegelt. Die Abstützungen 16 können nach der Entriegelung gegen die Kraft des Federelements 22 nach unten in die abgesenkte Stellung bewegt werden. Das nach unten Bewegen der Abstützung 16 kann durch fortgesetzten Druck auf die Entriegelungstaste 36 erfolgen.

Erreichen die Abstützungen 16 die abgesenkte, in Figur 1 dargestellte Stellung, drückt das am Winkelhebel 24 angreifende Federelement 28 die Rastnase 26 des Winkelhebels 24 in die Aussparung 37 des Doms 18. Die Abstützungen 16 werden in der abgesenkten Stellung verriegelt, auch wenn die Entriegelungstaste 36 niedergedrückt, d.h. das Entriegelungselement betätigt ist. Das Federelement 32 kann den zweiten, schwenkbar am Winkelhebel 24 gelagerten Hebel 30 erst dann wieder in die Bahn des Steuerstabs 34 schwenken, wenn die Entriegelungstaste 36 losgelassen worden ist und sich der Steuerstab 34 in Folge dessen nach oben bewegt hat. Erst danach lässt sich durch erneutes Niederdrücken der Entriegelungstaste 36 der Hebel 30 über den Steuerstab 34 wieder nach unten drücken und schwenkt den Winkelhebel 24 mit der Rastnase 26 außer Eingriff vom Dom 18. Solange die Entriegelungstaste 36 beim nach unten Bewegen der Abstützungen 16 gedrückt gehalten wird, liegt der Hebel 30 seitlich am Steuerstab 34 an, d.h. der Steuerstab 34 hält den Hebel 30 zur Seite gedrückt und gelangt nicht mit ihm in Eingriff.

In der angehobenen Stellung stützen die Abstützungen 16 in die Aufnahmen 12 eingestellte, nicht dargestellte Getränkebehälter in größerer Höhe als die Aufnahmen 12 seitlich ab, so dass auch hohe Getränkebehälter kippsicher im Halter 10 gehalten sind.

## Patentansprüche

1. Halter für einen Getränkebehälter zum Einbau in einem Kraftwagen, mit einer oben offenen Aufnahme (12) zum Einstellen eines Getränkebehälters, mit einer Abstützung (16), die mit einer Führung (18, 20) zwischen einer abgesenkten und einer angehobenen Stellung hin- und herbeweglich geführt ist, wobei die Abstützung (16) in der angehobenen Stellung einen in die Aufnahme (12) eingestellten Getränkebehälter oberhalb der Aufnahme (12) seitlich abstützt, und mit einer entriegelbaren Verriegelungseinrichtung (24, 26, 30), die die Abstützung (16) in der abgesenkten Stellung hält, **dadurch gekennzeichnet, dass** der Halter (10) eine Verriegelungseinrichtung (38, 40) aufweist, die die Abstützung (16) in der angehobenen Stellung hält.

2. Halter nach Anspruch 1, **dadurch gekennzeichnet, dass** die Verriegelungseinrichtung (24, 26, 30; 38, 40) ein Entriegelungselement (36) zum manuellen Entriegeln aufweist.

3. Halter nach Anspruch 2, **dadurch gekennzeichnet, dass** die Verriegelungseinrichtung (24, 26, 30) die Abstützung (16) beim Bewegen in die abgesenkte Stellung auch dann verriegelt, wenn das Entriegelungselement (36) betätigt ist.

4. Halter nach Anspruch 1, **dadurch gekennzeichnet, dass** die Abstützung (16) ringförmig ist.
